# FASCICULE DE BREVET EUROPEEN

(11) **EP 0 600 783 B1**
(45) Date de publication et mention de la délivrance du brevet: **28.08.1996**
(21) Numéro de dépôt: 93402888.7
(22) Date de dépôt: 30.11.1993
(51) Int. Cl.: B23B 13/02

(54) **Procédé et dispositif pour positionner les barres dans un tour**
Verfahren und Vorrichtung zum Positionieren von Stangen in einer Drehmaschine
Process and device for positioning bars in a lathe

(30) Priorité: 01.12.1992 FR 9214598
(43) Date de publication de la demande: 08.06.1994
(73) Titulaire: BECHET PRODUCTIC CLUSES, 74300 Cluses (FR)
(72) Inventeur: Gerard, Jean-Robert, F-74300 Cluses (FR)
(74) Mandataire: Poncet, Jean-François

(56) Documents cités:
- EP-A- 0 311 953
- DE-A- 2 110 561
- DE-A- 2 701 398
- PATENT ABSTRACTS OF JAPAN vol. 11, no. 82 (M-571)(2529) 12 Mars 1987 & JP-A-61 236 403 (IKURA) 21 Octobre 1986

## Description

La présente invention concerne les machines outils telles que les tours automatiques à chargement automatique de barres (décolleteuses ou tours à commande numérique), dans lesquelles un embarreur sélectionne une barre de matière première, et vient la positionner par poussée axiale dans la machine.

Jusqu'à présent, la seule action exercée par les embarreurs est une poussée axiale unidirectionnelle, qui permet de pousser la barre de matière première jusqu'à ce que son extrémité antérieure vienne porter contre un outil ou une butée de positionnement.

Après un premier positionnement, les mouvements longitudinaux de la barre sont commandés par la pince de poupée, elle-même entraînée en translation longitudinale par l'arbre à came de la machine.

Dans les structures connues, l'embarreur comprend un tube longitudinal coaxial avec le tour automatique, dans lequel coulisse une poussette entraînée en translation par un dispositif de transmission sollicité par un moteur et un dispositif d'embrayage. La poussette vient en appui sur l'extrémité postérieure de la barre de matière première insérée dans le tube, et repousse ladite barre en direction du tour automatique pour amener son extrémité antérieure dans la zone des outils de coupe.

Le document EP-A-0 311 953 décrit une telle structure d'embarreur, comprenant en outre un chariot coulissant sur des guides parallèles aux moyens de poussée, un crochet de retenue du chariot, un embrayage à friction pour relier les moyens de poussée et le chariot, un premier palpeur mécanique pour détecter la présence de l'extrémité antérieure de barre et commander le crochet de retenue du chariot, et un second palpeur mécanique pour détecter la présence du chariot en fin d'avance et bloquer le chariot. Ce dispositif à palpeurs mécaniques permet de commander les moyens de poussée pour arrêter l'avance initiale de la barre dès que son extrémité antérieure est en position pour l'affranchissage initial.

Le document DE-A-2 110 561, qui correspond au préambule de la revendication 1, décrit une autre structure d'embarreur comprenant un premier palpeur mécanique pour détecter la présence de l'extrémité antérieure de barre et commander un embrayage à friction mettant en mouvement un câble porteur d'un taquet sollicitant des palpeurs mécaniques pilotant les moyens de poussée.

Dans ces solutions connues, une première difficulté résulte de la présence nécessaire d'embrayages à friction, introduisant un risque d'erreur entre la position réelle de la barre et la position des moyens de détection de position, de sorte que le dispositif ne permet pas d'obtenir une précision suffisante pour la commande des moyens de poussée de barre pendant un cycle complet d'usinage.

Une seconde difficulté résulte de la présence des palpeurs mécaniques sollicités par la barre elle-même : l'instant de déclenchement du palpeur dépend du diamètre de la barre, ce qui introduit un risque d'erreur ; et cette solution à palpeur mécanique ne permet pas la détection fiable des barres de petit diamètre.

Un autre défaut peut se produire si la barre vient frapper à grande vitesse une butée, et rebondit légèrement avant serrage de la pince sur la barre. En effet, la distance de rebond introduit une erreur de position de la barre, de sorte que le premier usinage est défectueux.

Il en résulte une production de certaines pièces dont la longueur est inacceptable.

Le problème proposé par la présente invention est de concevoir une nouvelle structure d'embarreur permettant de déterminer de manière fiable et sans risque d'erreur la position de la barre à chaque instant d'un cycle d'usinage complet, et de commander de façon appropriée les moyens de poussée de barre pour éviter la production de pièces de longueur inacceptable.

Un autre objet de l'invention est de proposer une telle structure d'embarreur permettant de contrôler efficacement tout type de barre dans une plage étendue de diamètres de barre, et en particulier des barres de petit diamètre, sans contact mécanique avec la barre.

L'invention a en outre pour objet de proposer une nouvelle structure d'embarreur pouvant agir sans interruption du mouvement d'avance de barre.

Un autre avantage de la présente invention est d'augmenter sensiblement la rapidité de positionnement de la barre dans un tour automatique, les mouvements longitudinaux de la barre pouvant être effectués à des vitesses nettement supérieures à celles admissibles dans les embarreurs connus.

Pour atteindre ces buts ainsi que d'autres, le dispositif selon l'invention, permettant de positionner les barres de matière première sur un tour automatique, comprend un embarreur muni de moyens actionnés positivement par un moteur pour pousser axialement une barre de matière première entre une position reculée d'introduction de barre dans l'embarreur et une position d'avance extrême de barre. Le dispositif comprend :
- un capteur de détection de présence d'extrémité de ladite barre, destiné à être disposé en amont de la zone des outils du tour automatique, et produisant un signal de détection de passage d'extrémité de barre,
- un capteur de position angulaire pour mesurer la rotation dudit moteur de poussée axiale, et produire des signaux de mesure de position angulaire,
- des moyens de commande pour produire des signaux électriques de commande en fonction du signal de détection de passage d'extrémité de barre et en fonction des signaux de mesure de position angulaire, lesdits signaux de commande pilotant une alimentation électrique alimentant le moteur de poussée axiale pour produire une suite prédéfinie d'étapes d'avance de barre pour l'usinage de la barre.

Les moyens de commande sont agencés de façon à produire une poussée de barre selon deux types de poussée :
- une poussée en asservissement de position de barre, la force de poussée étant alors limitée par les seules capacités nominales du moteur et de son alimentation électrique, l'alimentation du moteur étant commandée par un signal d'écart entre la position désirée et la position mesurée de la barre,
- une poussée élastique, dans laquelle on asservit le couple moteur pour produire une poussée sensiblement égale à une valeur connue, quels que soient la valeur et le sens de déplacement de la barre.

De préférence, les moyens de commande utilisent le signal d'écart entre la position désirée et la position mesurée de la barre, pour produire un signal d'erreur en cas de présence d'un signal d'écart en fin d'étape de poussée de barre ; ce signal d'erreur est utilisé pour avertir l'utilisateur, ou pour arrêter le tour automatique, ou pour modifier son fonctionnement.

D'autres objets, caractéristiques et avantages de la présente invention ressortiront de la description suivante de modes de réalisation particuliers, faite en relation avec les figures jointes, parmi lesquelles :
- la figure 1 est une vue schématique de côté des éléments essentiels d'un embarreur selon la présente invention associé à un tour automatique ; et
- la figure 2 est une vue schématique illustrant les principaux organes fonctionnels de commande selon la présente invention.

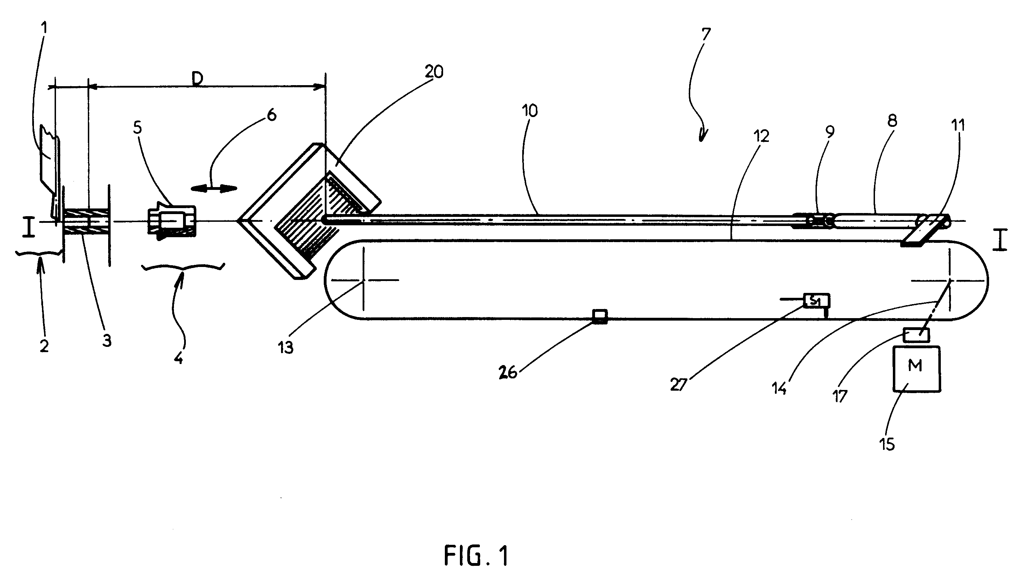

Dans le mode de réalisation représenté sur la figure 1, la machine telle qu'un tour automatique comprend un outil de coupe 1, placé dans une zone 2 d'outil de coupe, en aval d'un canon de guidage de barre 3, lui-même en aval d'une zone 4 occupée par une pince 5 montée dans la poupée du tour automatique. La pince 5 peut être serrée ou desserrée autour d'une barre de matière première, elle peut tourner autour de l'axe longitudinal I-I du tour automatique, et elle peut se déplacer longitudinalement selon la double flèche 6, entraînée selon les consignes données par l'arbre à came ou le calculateur numérique de tour automatique, non représenté sur les figures.

Ces organes de machine-outil ou de tour automatique peuvent être de tous types connus actuellement et n'ont donc pas à être décrits plus en détail.

L'embarreur 7 comprend également des organes habituels des embarreurs connus, et en particulier une poussette 8 pouvant coulisser longitudinalement selon l'axe I-I de la machine dans un tube de guidage non représenté sur la figure. L'extrémité antérieure de la poussette 8 comprend une pince de poussette 9 destinée à tenir l'extrémité postérieure d'une barre 10 de matière première introduite dans le tube de guidage.

Dans le mode de réalisation représenté, la poussette 8 est entraînée positivement en translation longitudinale par un dispositif de transmission à couplage permanent, dépourvu d'embrayage, comprenant un drapeau 11 latéral fixé à une chaîne 12 elle-même tendue entre deux pignons de renvoi tourillonnant sur des axes transversaux respectifs 13 et 14. L'un des deux axes respectifs, par exemple l'axe 14, est entraîné en rotation par un moteur 15.

La chaîne 12 porte un taquet 26 positionné de façon à venir actionner un contacteur 27 lorsque la poussette 8 se trouve à proximité de l'extrémité d'embarreur proche du tour automatique, indiquant la fin de poussée de barre.

En alternative, d'autres types d'embarreurs peuvent également être utilisés avec les moyens de l'invention, par exemple un embarreur à poussée par câble.

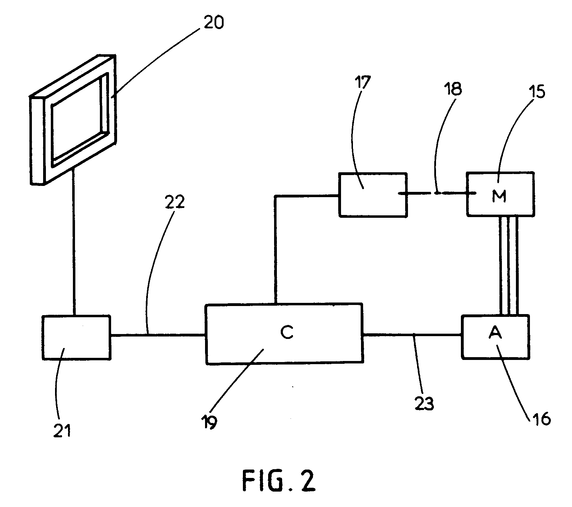

Le moteur 15 est avantageusement un moteur de type asynchrone triphasé à rotor aimanté. Il est alimenté en énergie électrique sous forme d'une tension triphasée à fréquence et amplitude variables, produite par une alimentation électrique du moteur 16 tel qu'illustré sur la figure 2.

Le moteur 15 est associé à un capteur de position angulaire 17, monté sur son arbre 18. Ce capteur de position angulaire peut, par exemple, être un résolveur. Il fournit des signaux codés, ou signaux de mesure de position angulaire, envoyés à des moyens de commande 19.

Un capteur de détection de présence d'extrémité de barre 20 est disposé en amont de la zone 2 des outils 1 du tour automatique, et, de préférence, en amont du canon 3 et de la zone 4 de pince 5 de poupée, comme le représente la figure 1. Ce capteur de détection de présence d'extrémité de barre 20 est avantageusement un capteur optique, se présentant sous la forme d'un cadre optique apte à produire un flux lumineux dans un plan transversal sensiblement perpendiculaire à l'axe longitudinal I-I ou axe de progression de la barre 10. Le cadre optique est apte à détecter la variation du flux lumineux lors de la traversée du plan par l'extrémité de la barre 10.

Le capteur de détection de présence de barre 20 est associé à un circuit de traitement de signal 21, permettant de produire un signal de détection de présence d'extrémité de barre lorsque la variation de flux lumineux se produit selon une vitesse de variation comprise dans une plage de variation prédéterminée. Ce signal est envoyé par une ligne 22 aux moyens de commande 19.

Le circuit de traitement de signal 21 permet ainsi de reconnaître avec précision la variation de flux lumineux produite par la pénétration de l'extrémité de barre, et de rendre le système insensible à toutes autres variations de flux lumineux telles que les variations produites par exemple par les dispositifs extérieurs d'éclairage du local dans lequel se trouve la machine.

De préférence, le circuit de traitement de signal 21 est inhibé pendant toutes les plages de durée autres que celle au cours de laquelle une extrémité de barre est susceptible de traverser le cadre optique du capteur de détection de présence de barre 20.

De préférence, également, un écran de protection tubulaire est inséré axialement dans le cadre optique, autour de la barre à usiner, pendant toutes les périodes du cycle d'usinage autres que celle au cours de laquelle une extrémité de barre est susceptible de traverser le cadre optique. La présence de ce tube protège le cadre optique contre les projections d'huile lors des opérations d'usinage de la barre, opérations au cours desquelles la barre est entraînée en rotation rapide autour de l'axe longitudinal I-I de la machine. Pendant les périodes de détection d'extrémité de barre, le tube de protection est escamoté axialement à l'écart du flux lumineux.

Pour améliorer la précision avec laquelle on peut détecter le signal de présence de l'extrémité de barre 10 dans le cadre optique, les moyens de commande 19 d'avance de barre sont agencés de façon à réguler la vitesse d'avance de barre 10 au voisinage d'une vitesse déterminée pendant l'étape de détection de présence d'extrémité de barre dans le capteur de détection de présence d'extrémité de barre 20. On connaît ainsi avec précision la variation normale de flux lumineux produite par la pénétration d'extrémité de barre dans le cadre optique, et on peut ainsi discriminer plus aisément le signal utile parmi les signaux parasites.

Les moyens de commande 19, recevant les signaux de détection de passage d'extrémité de barre produits par le capteur de détection de présence d'extrémité de barre 20, et recevant les signaux de position angulaire produits par le capteur de position angulaire 17, produisent des signaux de commande envoyés par la ligne 23 à l'alimentation électrique 16 alimentant le moteur 15 de poussée axiale, produisant une suite prédéfinie d'étapes d'avance de barre pour l'usinage de la barre 10. Les moyens de commande 19 comprennent ainsi un ensemble de mémoire dans lequel on peut entrer les données relatives aux étapes d'usinage, et comprennent un processeur pour produire les signaux de commande selon la suite désirée.

L'ensemble de mémoire des moyens de commande 19 comprend notamment une première mémoire pour mémoriser la valeur de distance D entre le capteur de détection de présence d'extrémité de barre 20 et la position initiale que doit prendre l'extrémité de barre 10 avant serrage de la pince 5 de poupée.

L'ensemble de mémoire comprend une seconde mémoire pour mémoriser la longueur de la pièce à réaliser par usinage de la barre 10.

L'ensemble de mémoire comprend une troisième mémoire pour mémoriser la largeur d'outil de coupe 1, ou distance entre les deux extrémités adjacentes des deux pièces successives usinées sur la barre.

Les moyens de calcul tels que le processeur sont associés à des programmes pour déterminer la position instantanée de l'extrémité de barre en fonction des signaux contenus dans les mémoires, en fonction du nombre de pièces précédemment réalisées dans ladite barre 10, et en fonction des signaux de mesure de position angulaire produits par le capteur de position angulaire 17.

L'alimentation 16 triphasée peut être de type connu, pour piloter le moteur 15. Toutefois, l'invention prévoit une façon particulière de piloter l'alimentation 16 par les moyens de commande 19.

Ainsi, les moyens de commande 19 sont agencés de façon à produire, par l'alimentation 16, une poussée de barre 10 selon deux types de poussée :
- une poussée en asservissement de position de barre, dans laquelle l'alimentation 16 alimente le moteur 15 de façon à suivre le mieux possible une consigne de position, selon les capacités maximales du moteur 15, l'alimentation 16 du moteur étant commandée par un signal d'écart entre la position désirée et la position mesurée de la barre 10 ;
- une poussée élastique, en asservissement de couple moteur, dans laquelle l'alimentation 16 envoie au moteur 15 une énergie électrique permettant au moteur 15 de produire une poussée à couple constant quels que soient le sens et la vitesse de déplacement de la barre 10.

En fonction des étapes de fonctionnement, les moyens de commande 19 produisent l'un ou l'autre des types de poussée de barre précédemment définis.

Par exemple, lors d'une procédure de poussée de barre contre une butée, cette procédure comprend deux étapes successives :
- une première étape de poussée rapide, en asservissement de position de barre, que l'on interrompt lorsque la position instantanée de l'extrémité de barre 10 est à proximité de la butée à atteindre,
- une seconde étape de poussée plus lente, en asservissement de couple moteur, pour compléter l'avance de la barre et l'amener en appui contre la butée.

Un autre intérêt du dispositif selon l'invention est qu'il est possible d'exercer sur la barre 10, pendant certaines étapes de fonctionnement, une traction élastique constante et limitée, par application d'un couple négatif approprié du moteur 15.

De préférence, les moyens de commande utilisent le signal d'écart entre la position désirée et la position mesurée de la barre 10, pour produire un signal d'erreur en cas de présence d'un signal d'écart en fin d'étape de poussée de barre. Ce signal d'erreur est alors utilisé soit pour avertir l'utilisateur, soit pour arrêter la machine, soit pour modifier son fonctionnement.

Par exemple, ce signal d'erreur est utilisé, dans une procédure d'introduction de barre dans un canon 3 de guidage de barre ou dans la pince 5 de poupée, pour interrompre la poussée de barre, pour provoquer un léger recul de la barre, et pour recommencer la procédure d'introduction de barre en produisant éventuellement une rotation appropriée de la broche jusqu'à l'introduction désirée. Une telle procédure peut en particulier être utile pour l'introduction d'une barre non cylindrique, par exemple à section en six pans.

Lors du fonctionnement normal du dispositif selon l'invention, on actionne les moyens de poussée de l'embarreur pour effectuer une avance initiale de la barre 10 en direction de la zone des outils de coupe. Pendant l'avance initiale de la barre 10, on détecte le passage de l'extrémité antérieure de barre 10 dans le plan occupé par le cadre optique du capteur de détection de présence d'extrémité de barre 20, en amont de la zone des outils 1, définissant une position d'origine de la barre 10. A compter de cette détection de passage d'extrémité antérieure de barre dans la zone de détection, on mesure le déplacement des moyens de poussée de barre à l'aide du capteur de position angulaire 17, pour en déduire la position instantanée de la barre 10. On utilise ces mesures de position pour commander le moteur 15 de poussée de barre et produire les étapes d'avance désirées pour l'usinage de la barre 10.

Selon l'invention, la procédure initiale d'affranchissement de barre peut être exécutée sans intervention de butée. Les moyens de poussée de barre sont alors commandés en fonction de la mesure de position de barre faite par le capteur de position angulaire 17, et ils amènent l'extrémité de barre légèrement en aval des outils de coupe 1 assurant l'affranchissement, sans l'utilisation d'une butée de positionnement.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pour positionner les barres (10) de matière première dans un tour automatique, comprenant un embarreur (7) muni de moyens (8, 9, 11, 12) actionnés positivement par un moteur (15) pour pousser axialement une barre (10) entre une position reculée d'introduction et une position d'avance extrême de barre, caractérisé en ce qu'il comprend :
- un capteur de détection de présence d'extrémité de barre (20), destiné à être disposé en amont de la zone (2) des outils (1) du tour automatique, et produisant un signal de détection de passage d'extrémité de barre (10),
- un capteur de position angulaire (17) pour mesurer la rotation dudit moteur (15) de poussée axiale et pour produire des signaux de mesure de position angulaire,
- des moyens de commande (19), pour produire des signaux électriques de commande en fonction du signal de détection de passage d'extrémité de barre et en fonction des signaux de mesure de position angulaire, lesdits signaux de commande pilotant une alimentation électrique (16) alimentant le moteur (15) de poussée axiale pour produire une suite prédéfinie d'étapes d'avance de barre (10) pour l'usinage de la barre.

2. Dispositif selon la revendication 1, caractérisé en ce que les moyens de commande (19) comprennent :
- une première mémoire pour mémoriser la valeur de distance (D) entre le capteur de détection de présence d'extrémité de barre (20) et la position initiale désirée d'extrémité de barre avant serrage de pince (5) de poupée,
- une seconde mémoire pour mémoriser la longueur de la pièce à réaliser par usinage de la barre (10),
- une troisième mémoire pour mémoriser la largeur d'outil de coupe (1),
- des moyens de calcul pour déterminer la position instantanée de l'extrémité de barre (10) en fonction des signaux contenus dans les trois mémoires précédentes, en fonction du nombre de pièces précédemment réalisées dans ladite barre (10), et en fonction des signaux de mesure de position angulaire produits par le capteur de position angulaire (17).

3. Dispositif selon l'une des revendications 1 ou 2, caractérisé en ce que les moyens de commande (19) sont agencés de façon à produire une poussée de barre (10) selon deux types de poussée :
- une poussée en asservissement de position de barre, limitée par les capacités nominales du moteur, l'alimentation (16) du moteur étant commandée par un signal d'écart entre la position désirée et la position mesurée de la barre (10),
- une poussée élastique, en asservissement de couple du moteur (15).

4. Dispositif selon la revendication 3, caractérisé en ce que les moyens de commande (19) utilisent le signal d'écart entre la position désirée et la position mesurée de la barre (10), pour produire un signal d'erreur en cas de présence d'un signal d'écart en fin d'étape de poussée de barre, ledit signal d'erreur étant utilisé pour avertir l'utilisateur, ou pour arrêter le tour automatique, ou pour modifier son fonctionnement.

5. Dispositif selon la revendication 4, caractérisé en ce que ledit signal d'erreur est utilisé, dans une procédure d'introduction de barre dans un canon de guidage de barre (3) ou dans une pince (5) de poupée, pour recommencer la procédure d'introduction en produisant éventuellement une rotation appropriée de la poupée jusqu'à l'introduction désirée de la barre.

6. Dispositif selon l'une quelconque des revendications 1 à 5, caractérisé en ce que le capteur de détection de présence de barre (20) est un cadre optique apte à produire un flux lumineux dans un plan transversal sensiblement perpendiculaire à l'axe longitudinal I-I de la machine ou axe de progression de la barre (10) et apte à détecter la variation dudit flux lumineux lors de la traversée dudit plan par l'extrémité de la barre (10).

7. Dispositif selon la revendication 6, caractérisé en ce que le capteur de détection de présence d'extrémité de barre (20) est associé à un circuit de traitement de signal (21), pour produire un signal de détection de présence d'extrémité de barre lorsque la variation de flux lumineux se produit selon une vitesse de variation comprise dans une plage de variation prédéterminée.

8. Dispositif selon la revendication 7, caractérisé en ce que les moyens de commande (19) sont agencés de façon à réguler la vitesse d'avance de barre (10) au voisinage d'une vitesse déterminée pendant l'étape de détection de présence d'extrémité de barre.

9. Dispositif selon l'une quelconque des revendications 6 à 8, caractérisé en ce qu'un écran de protection tubulaire est inséré axialement dans le cadre optique (20) autour de la barre (10) à usiner, pendant toutes les périodes du cycle d'usinage autres que celle au cours de laquelle une extrémité de barre est susceptible de traverser ledit cadre optique (20).

## Claims

1. Device for positioning bars (10) of raw material in an automatic lathe, comprising a bar feeder (7) equipped with means (8, 9, 11, 12) actuated positively by a motor (15) in order to push a bar (10) axially between a retracted introductory position and an extreme advanced position of the bar, characterised in that it comprises:
- a sensor (20) for detecting the presence of the end of the bar and intended to be disposed upstream of the zone (2) of the tools (1) of the automatic lathe, and producing a signal indicating detection of the passage of the end of the bar (10);
- an angular-position sensor (17) for measuring the rotation of said axial-thrust motor (15), and for producing measurement signals of the angular position;
- control means (19) for producing electrical control signals as a function of the signal detecting the passage of the end of the bar, and as a function of the measurement signals of angular position, said control signals controlling an electrical supply (16) supplying the axial-thrust motor (15) in order to produce a specific series of feed stages of the bar (10) for machining of said bar.

2. Device according to claim 1, characterised in that the control means (19) comprise:
- a first memory for storing the divergence value (D) between the sensor detecting the presence of the end of the bar (20) and the initial desired position of the end of the bar before being secured in the headstock clamp (5);
- a second memory for storing the length of the part to be produced by machining the bar (10);
- a third memory for storing the width of the cutting tool (1);
- calculating means for determining the position at any moment of the end of the bar (10) as a function of the signals contained in the three aforesaid memories, as a function of the number of parts previously produced in said bar (10), and as a function of the measurement signals of angular position produced by the angular-position sensor (17).

3. Device according to one of claims 1 or 2, characterised in that the control means (19) are adapted to produce a feed thrust of the bar (10) in accordance with two types of thrust:
- a thrust controlled by the position of the bar, restricted by the nominal capacity of the motor, the power supply (16) to the motor being controlled by a signal indicating the divergence between the desired position and the measured position of the bar (10);
- a resilient thrust, controlled by the torque of the motor (15).

4. Device according to claim 3, characterised in that the control means (19) utilise the signal indicating the divergence between the desired position and the measured position of the bar (10) in order to produce an error signal when there is present a divergence signal at the end of a feed stage of the bar, said error signal being used to warn the user or to stop the automatic lathe, or to modify its operation.

5. Device according to claim 4, characterised in that said error signal is utilised, in a procedure for introducing the bar into a bar guide barrel (3) or into a headstock clamp (5), in order to recommence the introduction procedure, if necessary producing an appropriate rotation of the headstock until the desired introduction of the bar is achieved.

6. Device according to any one of claims 1 to 5, characterised in that the sensor (20) detecting the presence of the bar is an optical frame capable of producing a luminous flux in a transverse plane substantially perpendicular to the longitudinal axis I - I of the machine, or to the feed axis of the bar (10), and capable of detecting the variation in said luminous flux when the end of the bar (10) crosses said plane.

7. Device according to claim 6, characterised in that the sensor (20) detecting the presence of the end of the bar is associated with a signal-processing circuit (21) for producing a signal indicating detection of the presence of the end of the bar when the variation in luminous flux is produced at a speed of variation comprised within a predetermined variation range.

8. Device according to claim 7, characterised in that the control means (19) are adapted to regulate the advance speed of the bar (10) in the vicinity of a specific speed during the stage of detection of the presence of the end of the bar.

9. Device according to any one of claims 6 to 8, characterised in that a tubular protective screen is inserted axially into the optical frame (20) around the bar (10) to be machined during all the periods of the machining cycle other than those during which an end of the bar is liable to cross said optical frame (20).

## Patentansprüche

1. Vorrichtung zum Positionieren von Stangen (10) aus einem Ausgangsmaterial in einer automatischen Drehmaschine mit einem Stangenschieber (7), der von einem Motor (15) zwangsschlüssig angetriebene Mittel (8, 9, 11, 12) zum axialen Verschieben einer Stange (10) zwischen einer zurückgezogenen Einschubstellung und einer vorgeschobenen Endstellung der Stange aufweist, gekennzeichnet durch:
- einen Sensor (20) zum Erfassen des Stangenendes, der vor der Schneidwerkzeuge (1) aufweisenden Bearbeitungszone (2) der automatischen Drehmaschine anbringbar ist und beim Durchlauf des Endes der Stange (10) ein Signal erzeugt,
- einen Winkelmeßfühler (17) zum Messen der Drehung des Motors (15) für den axialen Vorschub und zum Erzeugen von Meßsignalen entsprechend der Winkelposition,
- eine Steuereinrichtung (19) zur Erzeugung elektrischer Steuersignale in Abhängigkeit von dem Signal zum Erfassen des Durchlaufs des Stangenendes und von den Meßsignalen für die Winkelposition, wobei die Steuersignale die Stromversorgung (16) zum Speisen des Motors (15) für den axialen Vorschub steuern derart, daß eine vorbestimmte Abfolge von Vorschubschritten für die zu bearbeitende Stange (10) erzeugt wird.

2. Vorrichtung nach Anspruch 1, dadurch gekennzeichnet, daß die Steuereinrichtung (19) aufweist:
- einen ersten Speicher zum Einspeichern des Wertes des Abstandes (D) zwischen dem Sensor (20) zum Erfassen des Stangenendes und der gewünschten Anfangsposition des Stangenendes vor dem Spannen einer Greifzange (5) am Spindelstock,
- einen zweiten Speicher zum Einspeichern der Länge des bei der Bearbeitung der Stange (10) zu erzeugenden Stücks,
- einen dritten Speicher zum Einspeichern der Breite des Schneidwerkzeugs (1),
- eine Rechnereinheit zum Bestimmen der augenblicklichen Position des Stangenendes in Funktion der in den drei Speichern enthaltenen Signale, in Funktion von der Zahl der zuvor an der Stange (10) erzeugten Stücke und in Funktion der Meßsignale für die Winkelposition, welche von dem Winkelmeßfühler (17) erzeugt wurden.

3. Vorrichtung nach Anspruch 1 oder 2, dadurch gekennzeichnet, daß die Steuereinrichtung (19) so ausgelegt ist, daß sie eine Vorschubkraft für die Stange (10) nach zwei Vorschubtypen erzeugt:
- einen Vorschub zur Positionseinstellung der Stange, der durch die Nennleistung des Motors begrenzt ist, wobei die Stromversorgung (16) für den Motor gesteuert wird durch ein Differenzsignal entsprechend der Differenz zwischen der Sollstellung und der gemessenen Stellung der Stange (10),
- einen elastischen Vorschub zur Steuerung des Drehmomentes des Motors (15).

4. Vorrichtung nach Anspruch 3, dadurch gekennzeichnet, daß die Steuereinrichtung (19) das Differenzsignal zwischen Sollstellung und gemessener Stellung der Stange (10) zum Erzeugen eines Fehlersignals benutzt, wenn ein Differenzsignal am Ende eines Vorschubschrittes für die Stange vorliegt, wobei das Fehlersignal herangezogen wird, um den Benutzer zu warnen oder um die automatische Drehmaschine abzustellen oder um ihre Betriebsweise zu modifizieren.

5. Vorrichtung nach Anspruch 4, dadurch gekennzeichnet, daß das Fehlersignal beim Einführen der Stange in ein Stangenführungsrohr (3) oder in eine Greifzange (5) des Spindelstocks verwendet wird, um das Einführen der Stange fortzusetzen durch eventuelle Erzeugung einer geeigneten Drehung des Spindelstocks bis zur gewünschten Einführstellung der Stange.

6. Vorrichtung nach einem der vorhergehenden Ansprüche, dadurch gekennzeichnet, daß der Sensor (20) zum Erfassen des Stangenendes ein optischer Rahmen zur Erzeugung von Lichtstrahlen in einer Querebene ist, die im wesentlichen rechtwinklig zur Längsachse I - I der Drehmaschine oder zur Vorschubachse der Stange (10) liegt und Veränderungen des Lichtstromes erfaßt, wenn die Ebene von dem Ende der Stange (10) durchquert wird.

7. Vorrichtung nach Anspruch 6, dadurch gekennzeichnet, daß der Sensor (20) zum Erfassen des Stangenendes mit einer Signalauswerteschaltung (21) verbunden ist, um ein Signal für die Präsenz des Stangenendes zu erzeugen, wenn die Veränderung des Lichtstromes mit einer Geschwindigkeit abläuft, die innerhalb einer vorbestimmten Variationsbreite liegt.

8. Vorrichtung nach Anspruch 7, dadurch gekennzeichnet, daß die Steuereinrichtung (19) so ausgelegt ist, daß sie die Vorschubgeschwindigkeit für die Stange (10) während des Erfassens der Präsenz des Stangenendes in der Nähe einer vorbestimmten Geschwindigkeit einstellt.

9. Vorrichtung nach einem der Ansprüche 6 bis 8, dadurch gekennzeichnet, daß in den optischen Rahmen (20) und um die zu bearbeitende Stange (10) herum ein rohrförmiger Schutzmantel während aller Abschnitte des Bearbeitungszyklus eingesetzt ist mit Ausnahme desjenigen, bei dem das Stangenende im Begriff ist, durch den optischen Rahmen (20) hindurchzutreten.
